(19) Europäisches Patentamt
European Patent Office
Office européen des brevets

(11) **EP 2 091 241 A1**

(12) **EUROPEAN PATENT APPLICATION**

(43) Date of publication:
**19.08.2009 Bulletin 2009/34**

(51) Int Cl.:
**H04N 5/445** *(2006.01)*    *H04N 5/14* *(2006.01)*

(21) Application number: **09152644.2**

(22) Date of filing: **12.02.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **14.02.2008  TR 200800954**

(71) Applicant: **Vestel Elektronik Sanayi ve Ticaret A.S.
45030 Manisa (TR)**

(72) Inventor: **BORAN, Baris
45030 Manisa (TR)**

(74) Representative: **Cayli, Hülya
Paragon Consultancy Inc.
Koza Sokak No: 63/2
GOP
06540 Ankara (TR)**

(54) **Transparent OSD menu for a television system or the like**

(57)    The present invention relates to a home entertainment system and method for providing transparent OSD menus in relation with detected motion changes within consequent video frames of a video being displayed. Present invention provides a great ease to users to observe moving background videos when OSD (on screen display) menus are active.

Figure – 2

**Description**

**Technical Field**

This invention is related to a method for simultaneously displaying an OSD menu with a video overlay, where transparency of OSD menu varies with detected motion presence.

**Prior Art**

Within recent years, there has been an increasing demand in the entertainment market for providing features within television receivers and display systems for improving perceived picture quality. OSD (On Screen Display) menus are widely used within entertainment systems, especially in televisions, in order to offer users the opportunity to adjust television parameters, offering the users a great ease to observe the consequences of changes they make.

Although OSD Menus provide a great ease to users in operating television sets, OSD menus can overlap with a video playing on television sets, where user can not observe the background image and may miss an important scene displayed; this situation is especially irritating to the viewers not in possession of the controller.

In order to prevent this situation and in order to provide user the opportunity to observe OSD and video displayed at display device, within the prior art techniques, the users are offered the opportunity to transparently observe OSD menu simultaneously with background video; where users are supposed to set transparency level of OSD menu over displayed videos, such systems are disclosed in patent document EP0757873B. However users may wish to increase transparency level of OSD menu if displayed background video includes motion, or may wish to decrease transparency level if background image is stationary, which condition prevents the users to miss important scenes when a video and OSD menu are displayed simultaneously.

**Object of the Invention**

The present invention relates to a home entertainment system to overcome problems stated in prior arts and method for providing a transparent OSD menu in relation with detected motion changes within displayed video.

**Description of Figures**

   Figure-1 is a block diagram illustrating a preferred hardware system for present invention
   Figure-2 is a flow chart illustrating the basic process and options of displaying transparent OSD menu simultaneously with background video

**Description of Invention**

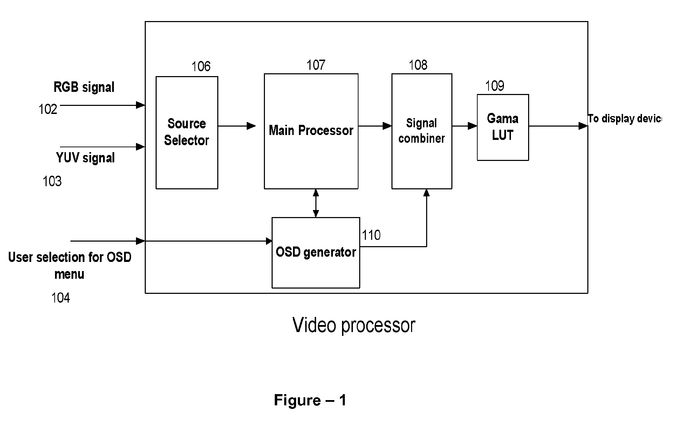

According to the present invention, in order to transparently display OSD menu over video displayed within a display system in relation with detected motion changes within said video, the video to be displayed is analyzed for motion changes, and transparency of OSD menu is set accordingly. A system to perform this described task is illustrated in Figure 1.

Figure 1 represents an inside structure of a video processor which is capable of detecting motion presence within a video to be displayed and which can adjust OSD menu transparency according to the features of present invention. According to the system described within Figure 1, the invention comprises a main processor (107), a source selector (106), a signal combiner (108), a gamma LUT (109), an OSD generator (110). According to the features of the present invention, the source selector 106 can be connected to various signal sources, signal sources which contain video signals that are broadcasted from far locations, for example a signal source selector can be connected to RGB (red, green, blue), or YUV(luminance and chrominance values) signal sources. A main processor (107) within video processor enables source selector to select one of signal sources and receives data related to a video to be displayed within display system. Main processor receives video data related to a video to be displayed and detects motion changes under the assumption that, a video to be displayed has a frame characteristic as ...N-2,N-1,N+1,N+2,N+3...where consequent frames forms the video to be displayed. The main processor within video processor may determine motion change by various ways; it is a well known prior art system to use luminance value, which value consist of main color components R(red),G(green) and B(blue),of a picture may be used to determine motion changes; where luminance changes refer to presence of motion within a video. Under the assumption that main processor will detect the motion changes via luminance value determination; a frame to be displayed (Nth frame for instance) is loaded to a buffer area (preferably within main processor 'not shown in figure) in order to determine luminance value each frame a video to be displayed have. This buffer area may be a random access memory-RAM, or another memory location within or outside main processor.

According to the present invention, the Nth frame to be displayed is initially divided to subfields (sub blocks) in order to evaluate luminance within each field at step within main processor, the main reason to divide a frame to be displayed into subfields is to evaluate the luminance value of each subfield a frame have, and to make a comparison between present luminance value of each subfield of frame N, with the luminance value of each subfield of previous frame((N-1) in this condition) have. After division of frame N into subfields, according to the present invention , the luminance value of previous frames are compared with luminance value of initial frames( for this example luminance value of (N-1)th frame and Nth frame are compared), this comparison may be performed in various ways. One of the known prior art for motion detection is luminance comparison between subfields, as mentioned before. Within an display system comprising several pixels, for example an LCD television receiver, subfields may be defined as pixel groups, for instance; a 8x8 pixel group may be considered to be a subfield, where a frame represented by 800x600 pixels will form 7500 subfield ((800x600)/(8x8)).The motion level in one subfield, 8x8 pixels, can be calculated with a simple approach by the below function;

$$Motion_{total} = \Sigma_{x,y=1}^{x,y=8} \sqrt{\left(\mathrm{M}_{x,y} - \left(\mathrm{M}-1\right)_{x,y}\right)^2}$$

Where M represent the luminance value, x and y represent the location of pixels within a subfield; by means of the above equation, the luminance change of one subfield of Nth and .(N-1)th frame, and the luminance change within 64 pixels can be calculated, and motion is approximately calculated by means of evaluating the luminance difference for all subfields of Nth and .(N-1)th frame(for this example 7500 subfields) within main processor(107). The main processor holds motion change data and determines presence of motion change at sub fields (blocks),if there is any.

In order to generate OSD menu, an OSD menu generator (110) is also used within video processor which generates OSD menu upon user request, user may request to open an OSD menu via remote control which preferably operates via infrared or radio frequency signals. Upon user request, an activated OSD menu is sent to a signal combiner (108). Upon user request, the generated OSD menu data is sent to both signal combiner and main processor (107). The position of OSD menu over background video is determined and known by main processor (107), and after evaluating motion changes within each sub fields of frames to be displayed, main processor determines if motion change occurs at subfields where OSD menu is displayed. If a motion change is present at the location where OSD menu is displayed, the transparency of OSD menu is increased in accordance with detected motion change magnitude(motion vector represents the magnitude of motion change); where the more motion change occur, the more transparent OSD menu becomes. The relation between transparency of OSD menu with detected motion change is determined with a OSD menu transparency determination rule; this rule is created in the site of manufacturer and stored in a memory location within video processor; according to the transparency determination rule the weight of signal generated by OSD generator (110) is varied at main processor (107) by a command sent to signal combiner (108). After receiving signals from signal combiner, the gamma values to determine gamma value of signals to be displayed, is determined by using a gamma look up table-LUT(109), and transparent OSD menu is displayed over video. If the OSD menu transparency determination rule has not been changed by user, the default OSD menu transparency rule is used, where; the transparency of OSD menu is increased and OSD menu becomes less visible when more motion changes on the video to be displayed occur, this default OSD menu transparency rule is created in the site of manufacturer. There can be more than one OSD menu transparency determination rules, and those rules can be hold in a memory location in video processor.

The transparency determination rule can later be changed by user; the user may enter data related to how OSD menu transparency should vary with motion changes by means of choosing one of OSD menu transparency determination rule via selections he/she performs via remote control.

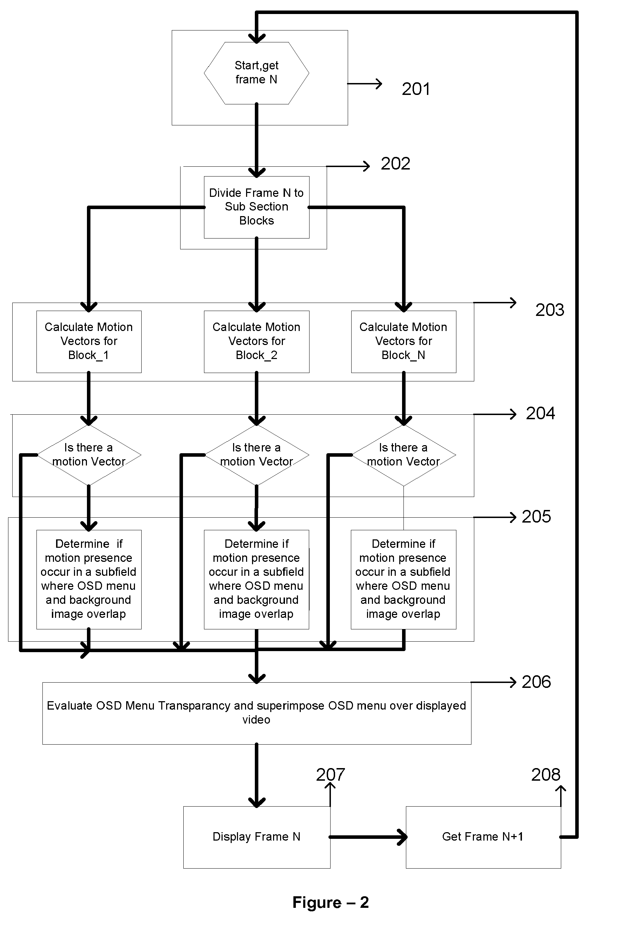

Figure 2 summarizes how transparency of OSD menu is varied in accordance with detected motion changes at video. According to the present invention, if the user enables OSD menu to be displayed over background image at 201, the Nth frame to be displayed is divided into sub section blocks at step 202 in order to evaluate the luminance value to determine motion changes. During luminance value comparison, the Nth frame to be displayed is compared with at least one previous frame, for example (N-1)th frame, in order to evaluate luminance change, and motion change accordingly. At step 203, luminance value is evaluated within the sub blocks (subfields) of frame N to determine motion change, if there is any. At step 204, blocks having motion vectors (motion changes) are compared with blocks where OSD menu is displayed; and at step 205 if there is an overlap between OSD menu and video blocks having motion vectors belonging to displayed background image, the frame N and transparent OSD menu are displayed simultaneously (206).

**Claims**

1. A method for displaying at least one OSD menu simultaneously with video displayed by an entertainment system comprising;

   - combining video signal with OSD menu signal
   - providing a perceived transparency for OSD menu
   - displaying said video simultaneously with said OSD menu

   **characterized in that**;
   said transparency of said OSD menu is determined in relation with an OSD menu transparency determination rule, wherein said transparency of said OSD menu varies with motion changes within said video.

2. A method according to claim 1 wherein; determination of said motion change comprises;

   - receiving a first video frame within said video
   - comparing said first video frame with at least another video frame to detect said motion change between said first video frame and said at least another video frame.

3. A method according to claim 1 or claim 2 wherein; said comparing said first video frame with at least another video frame to detect motion presence comprises the steps of;

   - dividing each of said first video frame and at least another video frame into at least two subfields
   - detecting luminance value change between said at least two subfields
   - determining motion change presence in relation with detected luminance value change.

4. A method according to claim 1 or claim 2 wherein; said OSD menu transparency determination rule is created in the site of manufacturer.

5. A system according to claim 4 wherein; said OSD menu transparency determination rule comprises more than one OSD menu transparency determination rule.

6. A system for displaying at least one OSD menu simultaneously with video displayed by an entertainment system comprising;

   - a main processor(107) for processing and detecting motion within video signals
   - a signal generator(110) for generating OSD menu signals
   - a signal combiner (108) for combining said video signal and said OSD menu signal
   - providing a perceived transparency for OSD menu
   - displaying said video simultaneously with said OSD menu

   **characterized in that**;
   transparency of said OSD menu is determined in relation with an OSD menu transparency determination rule, wherein said transparency of said OSD menu varies with said motion changes within said video.

**Figure – 1**

**Figure – 2**

Europäisches
Patentamt

European
Patent Office

Office européen
des brevets

# EUROPEAN SEARCH REPORT

Application Number

EP 09 15 2644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/121012 A1 (HIDA YOICHI [JP] ET AL) 31 May 2007 (2007-05-31) * paragraphs [0001], [0002], [0025], [0026], [0176] - [0183]; figures 1,11 * ----- | 1-6 | INV. H04N5/445 ADD. H04N5/14 |
| X | DE 198 43 919 A1 (SIEMENS AG [DE] INFINEON TECHNOLOGIES AG [DE]) 30 March 2000 (2000-03-30) * columns 1,4; figure 2B * ----- | 1,2,6 | |
| X | WO 97/42757 A (PHILIPS ELECTRONICS NV [NL]; PHILIPS NORDEN AB [SE] PHILIPS ELECTRONIC) 13 November 1997 (1997-11-13) * pages 3,4,6; figures 3,5 * ----- | 1,6 | |

| | TECHNICAL FIELDS SEARCHED (IPC) |
|---|---|
| | H04N |

The present search report has been drawn up for all claims

| Place of search | Date of completion of the search | Examiner |
|---|---|---|
| Munich | 13 May 2009 | Keck, Wolfram |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 15 2644

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2009

| Patent document cited in search report | | Publication date | Patent family member(s) | | Publication date |
|---|---|---|---|---|---|
| US 2007121012 | A1 | 31-05-2007 | CN | 1922652 A | 28-02-2007 |
| | | | JP | 2005242204 A | 08-09-2005 |
| | | | WO | 2005083670 A1 | 09-09-2005 |
| | | | KR | 20060114021 A | 03-11-2006 |
| DE 19843919 | A1 | 30-03-2000 | NONE | | |
| WO 9742757 | A | 13-11-1997 | CN | 1193444 A | 16-09-1998 |
| | | | DE | 69728014 D1 | 15-04-2004 |
| | | | DE | 69728014 T2 | 20-01-2005 |
| | | | EP | 0838117 A2 | 29-04-1998 |
| | | | ES | 2216139 T3 | 16-10-2004 |
| | | | JP | 11509710 T | 24-08-1999 |
| | | | US | 6359657 B1 | 19-03-2002 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0757873 B